# EUROPEAN PATENT SPECIFICATION

(11) **EP 0 485 646 B1**
(45) Date of publication and mention of the grant of the patent: **11.09.1996**
(21) Application number: 90121619.2
(22) Date of filing: 12.11.1990
(51) Int. Cl.: C03C 17/00, C03C 17/23

(54) **Glass bottles and process for preparing the same**
Glasflaschen und Verfahren zu deren Herstellung
Bouteilles en verre et leur procédé de production

(43) Date of publication of application: 20.05.1992
(73) Proprietor: KIRIN BEER KABUSHIKI KAISHA, Shibuya-ku Tokyo-To (JP)
(72) Inventor: Nakagawa, Manabu, c/o Kirin Beer Kabushiki Kaisha, Shibuya-ku, Tokyo-to (JP); Yokokura, Shuichi, c/o Kirin Beer Kabushiki Kaisha, Shibuya-ku, Tokyo-to (JP); Amano, Tsutomu, c/o Kirin Beer Kabushiki Kaisha, Shibuya-ku, Tokyo-to (JP)
(74) Representative: Reichel, Wolfgang, Dipl.-Ing.

(56) References cited:
- GB-A- 2 067 540
- GB-A- 2 125 783
- US-A- 3 051 593
- US-A- 3 561 940
- GLASS TECHNOLOGY, vol. 23, no. 6, December 1982, Sheffield (GB); A.S. SANYAL et al., pp. 271-276

## Description

### BACKGROUND OF THE INVENTION

### 1. Field of the Invention

The present invention relates to glass bottles and lightweight glass bottles having a coating on the external surface thereof, particularly returnable bottles which can be recovered and used repeatedly, and a process for preparation thereof.

### 2. Description of the Related Art

Hitherto, in the glass bottle industry, a surface of a one-way bottle was overcoated with an SnO₂ or TiO₂ coating during the process for preparing the bottle in order to improve the scuff resistance of the bottle surface.

More specifically, one-way bottles have on the external surface thereof a coating comprising SnO₂ or TiO₂ and formed by spraying SnCl₄ or TiCl₄ onto the bottles which have just been prepared and have not yet been annealed in an annealing chamber, remaining at a surface temperature of 400 to 550°C. Such process for coating is generally called hot end coating method.

The thickness of the coating thus formed is generally measured by a scale in "C.T.U." with a Hot End Coating Meter which is manufactured by American Glass Research Co. While the coating of one-way bottles in the art has a current standard of 20 to 80 C.T.U., the thickness of the coating is practically reduced to a range of 20 to 50 C.T.U. from the viewpoint of cost or appearance for avoiding the so-called iris phenomenon which may be caused by alkali washing before bottling. The unit "C.T.U." herein means a merely optical unit used for process control and has no physical meaning. However, 1 C.T.U. may be estimated at about 0,4 nm(4 Å) and we have also confirmed the appropriateness of the value with Elipsometer Model AEP-100 (manufactured by Shimazu Co.). Therefore, the SnO₂ or TiO₂ coating of one-way bottles prepared by the hot end coating method may have a thickness of 30 nm (300 Å) or less.

Even though such a coating technique is effective as a method for affording physical properties such as abrasion resistance or lubricity to the one-way bottle, the method could not be applied to the returnable bottle because of the following reason.

The returnable bottle is recovered and used repeatedly in principle. Bottles recovered from the market are washed and sterilized every time on recovery with a high-concentration and hot alkali solution such as aqueous sodium hydroxide solution in washers in a bottling factory.

When the bottle having the coating formed by the method used for the one-way bottle is applied to such an alkali treatment, the coating will be easily peeled off and thus loses its effect. For instance, beer bottles are generally washed with a 4% aqueous sodium hydroxide solution at a temperature of up to 80°C. Under such condition, the coating having a thickness of 20 to 50 C.T.U. formed by the method applied to the one-way bottle is usually peeled off in a single alkali washing cycle. If the thickness of the coating is increased to a range of 50 to 80 C.T.U., the coating may not be completely peeled off in a single alkali washing cycle. Such a washing treatment, however, causes iris phenomenon on the surface of the bottle, and the bottle may lose its commercial value from the aesthetic standpoint of packaging. Therefore, even in the case of one-way bottle, to the bottle is applied a coating which can be easily peeled off in a single alkali washing cycle before bottling.

From US-A-3 561 940 a process for preparing a coating on a glass bottle by using SnCl₄ at a temperature of 900 to 1500°F (about 482 to 815°C) has been known. The glass articles when coated by the said known process remain unchanged in appearance.

It has hitherto been impossible to prepare the returnable glass bottle having a coating which comprises SnO₂ or TiO₂ as a main component and resists repeated alkali treatment.

### SUMMARY OF THE INVENTION

Accordingly, it is an object of the present invention to provide a novel process for preparing glass bottles having a coating which has resistance to repeated alkali treatment.

It is a further object of the present invention to provide a novel process for preparing glass bottles having a coating which improves the strength of not only one-way bottles but returnable bottles.

It is yet another object of the present invention to provide a glass bottle having a coating which has resistance to repeated alkali treatment and improves the strength of the glass bottle.

Thus, the present invention provides a process for preparing a returnable glass bottle having a coating, which comprises the step of contacting a material selected from the group consisting of SnCl₄, (CH₃)₂SnCl₂ and TiCl₄ with a glass bottle which has been heated to have an external surface temperature of 600 to 700°C when said material is SnCl₄ or (CH₃)₂SnCl₂ or of 630 to 700°C when said material is TiCl₄, thereby to form a coating predominantly comprising SnO₂ or TiO₂ at a thickness of 40 to 100 nm (400 to 1000 Å), said coating not being peeled off within 8 hours upon dipping into a 4% by weight of an aqueous sodium hydroxide solution at 80°C.

According to the present invention, there is further provided a returnable glass bottle obtainable by the said process.

The glass bottle having the coating according to the present invention is excellent in resistance to abrasion and resistance to alkali and can be used repeatedly as a returnable glass bottle.

Further, the strength of the glass bottle having the coating according to the present invention can be improved, so that the weight of the glass bottle can be reduced.

Still further, the coating has a comparatively large refractive index and thus the reflection of light on the glass surface may increase, so that the discoloration of a content or other troubles can be prevented. Particularly, when the content is beer, the so-called "sun-struck" flavour which may be caused by the invasion of light can be suppressed.

### BRIEF DESCRIPTION OF THE DRAWINGS

Figures 1 and 2 are graphs which show the relationship between the surface temperature of a glass bottle and the time required for peeling the coating, respectively;
Figures 3 and 4 are graphs which show the relationship between the thickness of the coating and the time required for peeling the coating, respectively;
Figure 5 is a graph which shows the relationship between the internal pressure strength of bottles and the frequency of passing the bottle through a bottling step including an alkali washing;
Figure 6 is a graph which shows the relationship between the impact strength of bottles and the frequency of passing the bottle through a bottling step including an alkali washing;

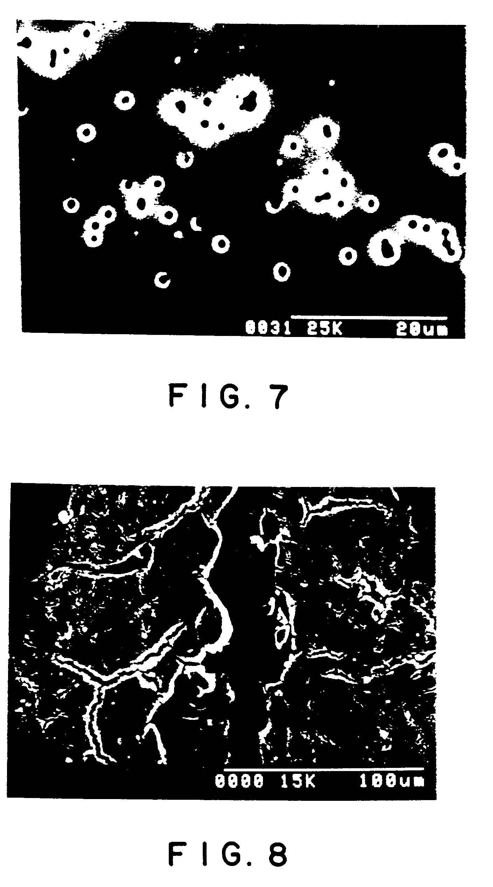

Figure 7 is a photomicrograph of the surface of the coating comprising SnO₂ according to the present invention at a thickness of 600 angstroms after dipping into 4% by weight aqueous sodium hydroxide solution (2,000 × magnification); and
Figure 8 is a photomicrograph of the surface of the coating comprising SnO₂ according to the hot end coating method at a thickness of 600 angstroms after dipping into 4% by weight aqueous sodium hydroxide solution (2,000 × magnification).

### DESCRIPTION OF THE PREFERRED EMBODIMENT

### Glass Bottle

A glass bottle to which the present invention can be applied, i.e., a glass bottle as a base is a returnable glass bottle which is used repeatedly. Such a returnable glass bottle includes glass bottles for alcoholic drinks such as beer, whiskey or sake, seasonings such as soy sauce or vinegar, refreshing drinks such as cola, lemon pop or juice, milk or the like.

Glass bottles which can enjoy the effect of the present invention include returnable bottles for liquid carbonate drinks such as beer, cola or lemon pop in which carbonate gas is dissolved to an internal pressure of 1.0 to 3,9 bar (4,0 kg/cm²), preferably 1,2 to 2,5 bar (kg/cm²) at room temperature.

The returnable glass bottles may include glass bottles comprising soda lime glass or borosilicate glass, preferably soda lime glass.

### Preparation of Coating

### (1) Coating Conditions

The process for preparing the coating of the present invention comprises the step of bringing a glass bottle having a specific external surface, temperature into contact with a material selected from the group consisting of SnCl₄, (CH₃)₂SnCl₂ and TiCl₄, thereby to form a coating comprising SnO₂ or TiO₂ as the main component.

The process for preparing a coating of the present invention requires an external surface temperature of the glass bottle of 600 to 700°C in the case of the coating predominantly comprising SnO₂ and of 630 to 700°C in the case of the coating predominantly comprising TiO₂. If the external surface temperature of the glass bottle is less than 550°C, the coating is inevitably peeled off within 8 hours upon dipping the bottle into a 4% by weight aqueous sodium hydroxide solution at 80°C even if the coating has a thickness in the range of 40 to 100 nm (400 to 1,000 angstroms), which is the same range of the present invention. It is not preferable that the bottle thus treated has iris phenomenon. The temperature exceeding 700°C is undesirable because the glass bottle tends to be deformed by such a high temperature and to be cracked due to the difference of coefficients of thermal expansion between the bottle and the coating.

Further, according to the process of the present invention, the coating comprising SnO₂ or TiO₂ as the main component must be prepared at a thickness of 40 to 100 nm (400 to 1,000 angstroms) under the above temperature condition. The coating having a thickness of less than 40 nm (400 angstroms) is not preferred because it has a poor durability and is inevitably peeled off within 3 hours upon dipping into a 4% by weight aqueous sodium hydroxide solution at 80°C. The coating having a thickness exceeding 100 nm (1,000 angstroms) is not preferred either because it causes interference phenomenon which impairs the aesthetic appearance of the bottle and because it tends to be cracked due to the difference of coefficients of thermal expansion between the bottle and the coating.

### (2) Material for Forming the Coating

In the process for preparing the coating according to the present invention, a coating comprising SnO₂ or TiO₂ as the main component is prepared on the glass bottle having a specific external surface temperature. As a material which can form the coating comprising SnO₂ or TiO₂, SnCl₄, TiCl₄, or (CH₃)₂SnCl₂ can be used.

It is also possible to improve the properties of the coating by incorporating other metal oxides or the like within the scope of the purpose of the present invention.

### (3) Preparation of the Coating

In the process for preparing the coating according to the present invention, the glass bottle having a specific external surface temperature and the material for forming the coating can be contacted by any method without limitation with the proviso that the method can perform the formulation of the coating on the surface of the glass bottle. The coating can be formed by the methods such as chemical deposition or spraying method. The chemical deposition method indicates a method for preparing a coating of SnO₂ or TiO₂ on the external surface of the bottle comprising the steps of vaporizing the above-mentioned material by heating, transferring the vaporized material into a coating chamber by means of a dry gas such as air, oxygen or an inert gas, and reacting the material with oxygen or water which exists in the atmosphere or on the surface of the bottle. The spraying method refers to a method comprising the steps of dissolving the material in an organic solvent, spraying it on the surface of the bottle, and pyrolytically decomposing it to form the coating.

### Coating

The glass bottle having the coating according to the present invention generally exhibits a silvery white appearance. It forms a contrast with the fact that the appearance of the glass bottle having the coating according to the hot end coating method is the same appearance of an uncoated glass bottle.

The coating obtained by the process according to the present invention is supposed to be attached securely by the so-called "anchor effect" which is caused by the transfer of the coating component to the glass phase of the bottle to some degree. As a result, it is supposed that the coating hardly peels off even in the case of an alkali treatment at a high temperature and a high concentration. We have confirmed the following fact. It was observed by a microscope (2,000 × magnification) that peeled portions on the surface of the coating comprising SnO₂ at a thickness of 60 nm (600 angstroms) according to the present invention formed like dots upon dipping into a 4% by weight aqueous sodium hydroxide solution. On the other hand, it was observed by a microscope (2,000 × magnification) that peeled portions on the surface of the coating comprising SnO₂ at a thickness of 60 nm (600 angstroms) according to the hot end coating method spread continuously over almost all the surface after the alkali treatment as mentioned above.

The coating obtained by the present invention has an indication that the coating is not peeled off within 8 hours upon dipping into a 4% by weight aqueous sodium hydroxide solution at 80°C. The wording "the coating is not peeled off within 8 hours" means that no peeling of the coating is visually observed after the above alkali treatment.

### Lightweight Glass Bottle

The glass bottle having the coating according to the present invention can be improved in strength. In particular, the impact strength and the internal pressure resistance can be improved. As a result, it is possible for the bottle having the coating of the present invention to possess a strength equal to or higher than that of an untreated glass bottle, even if the base glass bottle has a thin glass thickness. In other words, the process for preparing the coating according to the present invention enables the preparation of a reduced weight glass bottle, i.e., a lightweight glass bottle.

The following examples are provided to enable one skilled in the art to practice the present invention. However, these examples are merely illustrative of the invention and are not to be read as limiting the scope of the invention.

### Example 1

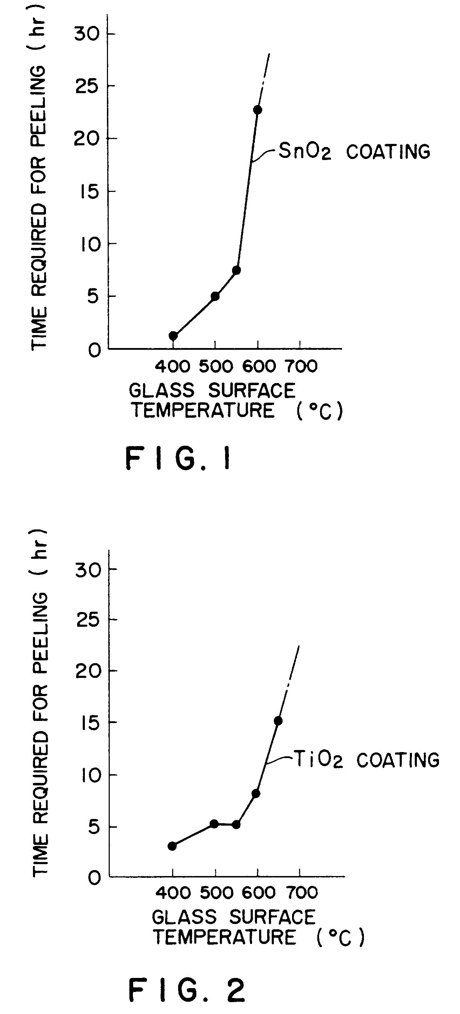

A coating comprising SnO₂ or TiO₂ as the main component was formed at a thickness of 60 nm (600 angstroms) on large-size beer bottles (manufactured by Kirin Beer K.K., returnable bottles having a weight of 605 g prepared in a bottle making machine) at various surface temperatures of the glass bottles. The bottles thus obtained were dipped into a 4% by weight aqueous sodium hydroxide solution at 80°C, and the time required for the peeling of the coating was measured. The results are shown in Figures 1 and 2.

### Example 2

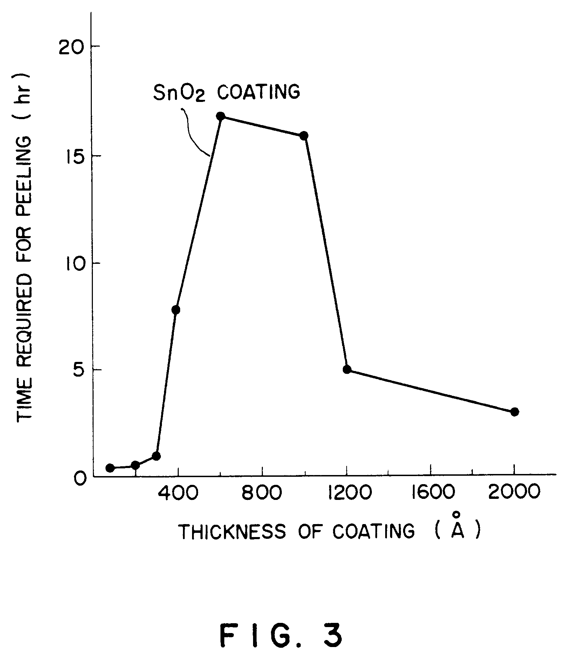

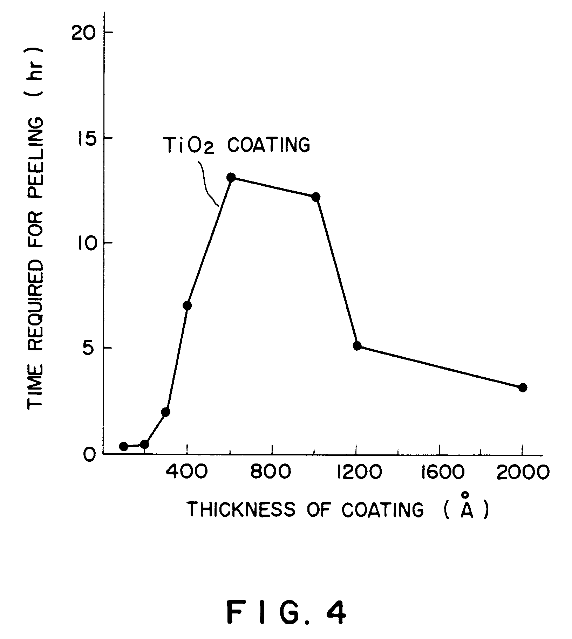

A coating comprising SnO₂ or TiO₂ as the main component was formed on the same bottles as in Example 1 at various thicknesses at a glass surface temperature of 630°C. The bottles thus obtained were treated in the same manner as in Example 1, and the time required for the peeling of the coating was measured. The results are shown in Figures 3 and 4.

### Example 3 and Comparative Example 1

The same large-size bottles as in Example 1 and lightweight large-size bottles which had the same profile as the above large-size bottle but had their weight reduced by 130 g were provided.

While the external surface temperature of these bottles was maintained at 600 to 700°C over the entire surface thereof, an SnO₂ coating was formed by spraying SnCl₄ and depositing it on the surface of the bottles at an average coating thickness of 60 nm (600 angstroms). The bottles having the coating thus obtained and uncoated bottles having a weight of 605 g were passed 30 times repeatedly through a bottling step in an ordinary beer factory including an alkali washing (with a 4% by weight aqueous sodium hydroxide solution at a maximum temperature of 80°C for about 10 minutes).

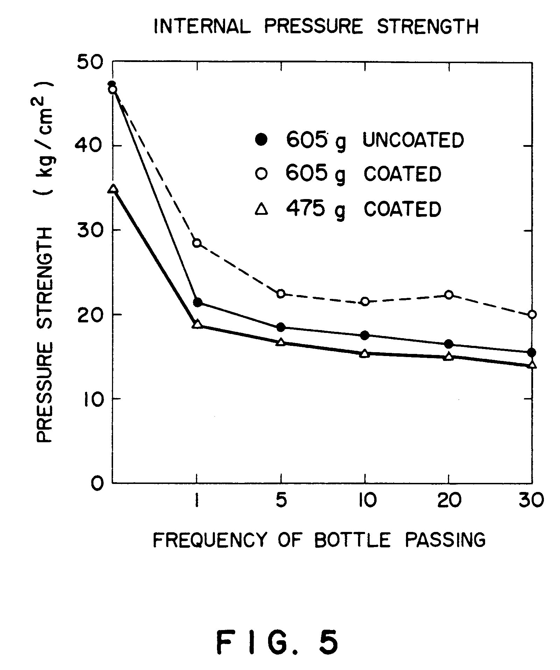

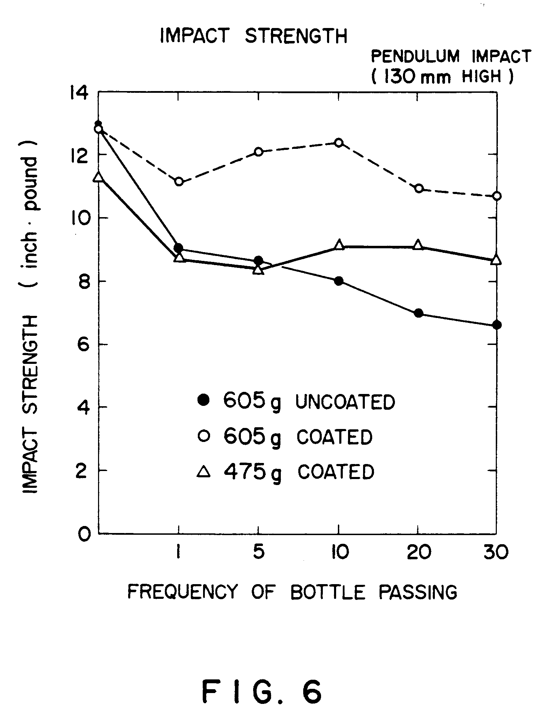

These bottles which had been subjected to the above test were then estimated for the internal pressure resistance and the impact strength. The results are shown in Figures 5 and 6. Comparing the uncoated bottles having a weight of 605 g with the coated bottle having a weight of 605 g, the reduction of the strength of the coated bottle is lesser than that of the uncoated bottle. The coated bottle having a weight of 475 g has the same internal pressure resistance as the 605 g uncoated bottles. Further, the 475 g coated bottle is superior in impact strength to the 605 g uncoated bottle. The results show the fact that the weight of glass bottles can be reduced by the coating according to the present invention.

Ten (10) bottles of each group after passing through the above bottling step were picked up to estimate the damage by the scuff marks on the bottles. The results are shown in Table 1.

**Table 1**

| | 1 | 2 | 3 | 4 | 5 | 6 | 7 | 8 | 9 | 10 |
|---|---|---|---|---|---|---|---|---|---|---|
| 605 g Coated | +1 | +1 | +1 | +1 | +1 | +1 | +1 | +1 | +1 | +1 |
| 475 g Coated | +1 | +1 | +1 | +1 | +1 | +1 | +1 | +1 | +1 | +1 |
| 605 g Uncoated | +4 | +4 | +4 | +4 | +4 | +4 | +4 | +4 | +4 | +4 |

Indices to the damage of the samples are as follows.
- 0 :: Intact
- +1:: Slightly damaged
- +2:: Damaged
- +3:: Considerably damaged
- +4:: Severely damaged

### Comparative Example 2

An SnO₂ coating was formed at a thickness of 16 nm (160 angstroms; about 40 C.T.U.) by spraying SnCl₄ onto the same bottles having a weight of 605 g as in Example 3 at a surface temperature of 400 to 500°C.

The glass bottles thus obtained were passed through the same bottling step as in Example 3. As a result, the coating was completely peeled off by one passing.

### Example 4

The formation of a coating was carried out in the same manner as in Example 3 except that a TiO₂ coating was formed by spraying TiCl₄ onto the same bottles having a weight of 605 g as in Example 3.

The glass bottles thus obtained were passed 15 times repeatedly through the same bottling step as in Example 3. The results were as good as those in Example 3.

### Comparative Example 3

A coating was formed in the same manner as in Comparative Example 2 except that a TiO₂ coating was formed by spraying TiCl₄.

The glass bottles thus obtained were passed through the same bottling step as in Example 3. As a result, the coating was completely peeled off by one passing.

## Claims

1. A process for preparing a returnable glass bottle having a coating, which comprises the step of contacting a material selected from the group consisting of SnCl₄, (CH₃)₂SnCl₂ and TiCl₄ with a glass bottle which has been heated to have an external surface temperature of 600 to 700°C when said material is SnCl₄ or (CH₃)₂SnCl₂ or of 630 to 700°C when said material is TiCl₄, thereby to form a coating predominantly comprising SnO₂ or TiO₂ at a thickness of 40 to 100 nm (400 to 1000 Å), said coating not being peeled off within 8 hours upon dipping into a 4% by weight of an aqueous sodium hydroxide solution at 80°C.

2. A process according to claim 1, wherein the bottle used as starting material is a one-way bottle which is to be converted into a returnable bottle.

3. A returnable glass bottle obtainable by a process according to any one of the claims 1 to 2.

## Patentansprüche

1. Verfahren zur Herstellung einer Mehrweg-Glasflasche mit Überzug, wobei man ein Material aus der Gruppe SnCl₄, (CH₃)₂SnCl₂ und TiCl₄ mit einer Glasflasche, die derart erhitzt worden ist, daß sie an ihrer äußeren Oberfläche eine Temperatur von 600 bis 700°C aufweist, wenn das Material SnCl₄ oder (CH₃)₂SnCl₂ ist oder eine Temperatur von 630 bis 700°C, wenn das Material TiCl₄ ist, in gerührung bringt, um dadurch einen Überzug auszubilden, der vorwiegend aus SnO₂ oder TiO₂ besteht, eine Dicke von 40 bis 100nm (400 bis 1000 A) aufweist und sich nach Eintauchen in vier gewichtsprozentige Natronlauge von 80°C innerhalb 8 Stunden nicht ablöst.

2. Verfahren gemäß Anspruch 1, wobei die als Ausgangsmaterial verwendete Flasche eine Einwegflasche ist, die in eine Mehrwegflasche umgewandelt werden soll.

3. Mehrweg-Glasflasche, erhältlich nach einem Verfahren gemäß Anspruch 1 oder 2.

## Revendications

1. Procédé pour fabriquer une bouteille en verre consignée ayant un revêtement, qui comprend l'étape consistant à mettre en contact un matériau choisi dans le groupe constitué de SnCl₄, (CH₃)₂SnCl₂ et TiCl₄ avec une bouteille en verre qui a été chauffée pour avoir une température de surface externe de 600 à 700°C lorsque ledit matériau est SnCl₄ ou (CH₃)₂SnCl₂ ou de 630 à 700°C lorsque ledit matériau est TiCl₄ , formant ainsi un revêtement comprenant principalement du SnO₂ ou du TiO₂ à une épaisseur de 40 à 100 nm (400 à 1000 Å), ledit revêtement n'étant pas détaché en l'espace de 8 heures en le plongeant dans une solution aqueuse d'hydroxyde de sodium à 4 % en poids à 80°C.

2. Procédé selon la revendication 1, dans lequel la bouteille utilisée comme matériau de départ est une bouteille non-consignée qui doit être transformée en une bouteille consignée.

3. Bouteille en verre consignée obtenue par un procédé selon l'une quelconque des revendications 1 à 2.
